# EUROPEAN PATENT APPLICATION

(11) **EP 3 753 627 A1**
(43) Date of publication of application: **23.12.2020**
(21) Application number: 19180931.8
(22) Date of filing: 18.06.2019
(51) Int. Cl.: B01D 67/00, B01D 69/10

(54) **FABRICATION OF SUSPENDED FUNCTIONAL POLYMER MEMBRANES BASED ON THE COMBINATION OF PLANAR TECHNOLOGY AND ADVANCED MANUFACTURING TECHNIQUES**

(71) Applicant: PAUL SCHERRER INSTITUT, 5232 Villigen PSI (CH)
(72) Inventor: PADESTE, Celestino, 5430 Wettingen (CH); MARTIEL, Isabelle, 5400 Baden (CH)
(74) Representative: Fischer, Michael

(57) **Abstract**

The present invention relates to suspended polymer membranes comprising:
a) at least one polymer membrane with a specific functionality, and
b) at least one polymer-based supporting frame prepared by additive manufacturing such that the polymer-based supporting frame adheres to the polymer membrane thereby generating freestanding suspended sections of the polymer membrane.

Further, the present invention relates to a method for manufacturing suspended polymer membranes, comprising the steps of:
a) spin-coating of a soluble polymer layer onto a silicon wafer or another flat substrate being similar in terms of physical and chemical behavior;
b) spin-coating of a layer of a polymer with low solubility on top of the soluble polymer layer;
c) hot embossing of this two-layer setup with a master with structural features of height equal to or larger than the thickness of the two-layer setup;
d) optionally reactive ion etching to the holes generated by the hot embossing;
e) additive manufacturing of a support frame on top of the hot embossed two-layer setup;
f) dissolving of the soluble polymer underlayer resulting in a freestanding suspended-polymer membrane being supported by the support frame; and
g) optional treating the surface of the polymer membrane in order to modify the chemical and/or physical properties of the polymer membrane, such as the surface energy of the polymer membrane.

## Description

The present innovation relates to a polymer-based multicomponent product (hereafter referred to as suspended polymer membrane, SMP). The invention also relates to advanced manufacturing schemes for the production of such suspended polymer membranes. Furthermore, the invention relates to the use of such suspended polymer membranes for applications in the life science and pharmaceutical industry, as well as for filtration and/or separation processes.

In life science and for pharmaceutical studies, it is often necessary to position a sample of interest for investigation, imaging or probing with radiation. The sample must be immobilized on a support with adequate properties, for instance rigidity, low background, transparency, and other specific functionalities useful for sample preparation and data collection efficiency. Suspended membranes optimized for low absorption of light, X-rays or electrons while maintaining sufficient stability during the measurements represent attractive sample supports for many applications. In the case of serial protein crystallography at synchrotrons or at X-ray free electron lasers (XFELs), small protein crystals are addressed using the X-ray beam for diffraction data collection. Removing of the mother liquor from the crystallization solution is in this case of utmost importance for low background signals. This can be achieved when using a perforated support membrane with holes big enough for blotting or sucking the liquid through holes, but small enough to retain the crystals. Materials such as silicon, silicon nitride, and polymers are employed to produce support membranes with such sieving function. The present invention covers novel types of suspended polymer membranes as supports, and their fabrication based on polymer technology such as nanoimprint lithography and 3D printing.

The present invention is represented by the independent claims 1 and 13. Preferred embodiments of the present invention are given by the dependent claims 2 to 12 and 14 to 17.

The suspended polymer membrane according to the present invention is a suspended polymer membrane, comprising:
a) at least one polymer membrane with a specific functionality, and
b) at least one polymer-based supporting frame prepared by additive manufacturing such that the polymer-based supporting frame adheres to the polymer membrane thereby generating free-standing suspended sections of the polymer membrane.

The method according to the present invention is a method for manufacturing a suspended polymer membranes, comprising the steps of:
a) spin-coating of a soluble polymer layer onto a silicon wafer or another flat substrate being similar in terms of physical and chemical behavior;
b) spin-coating of a layer of a polymer with different solubility on top of the soluble polymer layer;
c) hot embossing of this two-layer setup with a master with structural features of height equal to or larger than the thickness of the two-layer setup;
d) optionally reactive ion etching of the holes generated by the hot embossing;
e) additive manufacturing of a support frame on top of the hot embossed two-layer setup;
f) dissolving of the polymer underlayer in a specific solvent, resulting in a freestanding suspended-polymer membrane being supported by the support frame; and
g) optional treating the surface of the polymer membrane in order to modify the chemical and/or physical properties of the polymer membrane, such as the surface energy of the polymer membrane.

Preferred use cases for the suspended polymer membranes are:
- as solid support for serial protein crystallography at Synchrotron X-ray facilities and X-ray Free Electron Lasers (XFELs);
- as template for cell seeding and stem cell research;
- for the purpose of filtration or separation processes (e.g. microfiltration, ultrafiltration, reverse osmosis); and
- in the field of water purification, wastewater treatment, pharmaceutical production, and blood purification with a variety of industrial process separations, such as food and beverage processing, electropaint recovery and gas separation.

In a particular production scheme, the membrane is formed as a thin film atop of a soluble material deposited on a flat substrate and the functionality is implemented by forming perforations in the film using hot embossing or photolithographic processes. A polymer frame is then 3-D-printed directly on top of the functionalized film before dissolving the soluble material to obtain the freestanding functional membrane suspended by the frame serving as the support structure.

In another production scheme, a functional membrane is fixed on a flat substrate e.g. using a soluble material before 3-D-printing the frame and dissolving the soluble material to obtain the suspended polymer membranes.

In both production schemes, further functionalities may be implemented. Examples of such optionally added functionalities include surface treatments for adjustment of surface properties, implementation of microfluidic elements for liquid sample application or fabrication of electrodes for electrical addressing of the samples.

In one particular embodiment, the invention covers the use of such a *suspended polymer membrane* as solid support for serial protein crystallography experiments at synchrotron X-ray sources or X-ray free electron lasers. Low thickness, high stability, homogeneity, blotting efficiency, and X-ray transparency are key properties for applications in crystallography, in particular in context of pre-location of the crystals using optical microscopy before the actual X-ray-based experiments.

In this context, the solution presented here provides significant advantages compared to the state of the art solutions:
- Thanks to low background and transparency, crystals can be placed anywhere on the membrane, i.e. without confinement to ports or holes.
- Depending on the pore sizes, it allows measurements of protein crystals of sizes down to the sub-micrometer scale.
- Fiducials such as metal marks may be integrated in the chip. Furthermore, the frame can be used as reference, or any image registration method can be used.
- Blotting from polymer chip is easy and relatively simple. Blotting allows imaging without any refraction effect, and crystals are well visible and all in the same plane.
- Therefore, high magnification with smaller depth of field can be used for imaging very small crystals (micron-sized or even diffraction limited imaging), which is not possible with previous art.
- Enclosing the supports between windows allows measurements at room temperature.
- Multiple sub-windows can be used to increase the area and/or reinforce the free-standing membrane.
- Strong reflections that may destroy the X-ray detectors (a typical problem when using silicon-based supports) are not to be expected.

In another embodiment, the *suspended polymer membranes* are used as separator membranes between compartments in devices used for cell experiments, including stem cell differentiation studies. The membranes may act as permeable supports for cells or as a barrier between different populations of cells.
- The separator function may be confined to the exchange of oxygen while preventing water permeation, thus allowing oxygen supply to a cell culture under development over longer periods of time.
- The 3D geometry of holes within the separator membrane can be specifically designed for guiding cell populations into the desired shape.

In yet another embodiment the suspended polymer membranes are used for the purpose of filtration or separation processes.
- By adjusting the size of through-holes in the suspended membrane, the cut-off level for filtration of particles can be adjusted down to very low size ranges.
- One particular application of interest are separator membranes for gas exchange respectively pressure equilibration (around atmospheric pressure mainly) while being an effective barrier for water.

### Examples of fabrication and applications of suspended polymer membranes (SPMs)

### Example 1 - preparation of suspended polymer membranes with micro-hole arrays.

A series of SMPs were prepared as follows. First, a 250 nm thick layer of poly-vinylpyrrolidone (PVP) was spin-coated on a silicon wafer, then a second, 2-3 µm thick layer of COC was spin-coated on top of the PVP layer. The top COC layer was perforated by hot embossing with silicon wafer with a microfabricated array of pillars of 2-5 µm in height and about 2 µm in diameter. Finally, frames were attached to the perforated films by direct 3D-printing of poly-lactic acid (PLA) onto the pre-structured film. Final devices were separated from the silicon wafer by dissolving the PVP interlayer in a water bath.

### Example 2 preparation of suspended polymer membranes with conical holes.

A stamp with arrays of micro-pyramids of about 60 µm in height was fabricated from a master with corresponding holes in a silicon wafer produced with standard photolithography and wetetching protocols. This stamp was embossed into a 25-50 µm thick polymer film backed with a Teflon film, resulting in conical holes with openings at the back of a few micrometers in size. Frames were attached by 3D-printing as described above.

### Example 3 preparation of SMPs based on electrospun nanofiber mats.

A 250 nm thick layer of water-soluble PVP was first spin-coated on a silicon wafer. Thereon, 15-25 µm thick layers of nanofiber mats consisting of polymers such as polyamide (Nylon) or polylactide (PLA) were deposited by electrospinning. PLA frames were attached by 3D-printing and final SPMs were obtained by dissolution of the PVP layer.

### Example 4 preparation of SPMs from pre-formed membranes.

10-100 µm thick track etched membranes or biaxially stretched poly-olefin membranes were fixed on wafer surfaces. Frames of PLA were attached to the membranes by direct 3D-printing. Treatments with oxygen plasma were used to tune the wetting properties and blotting efficiencies of the suspended membranes.

### Example 5 application of SPMs for protein crystallography at cryo conditions.

Suspended membranes of the type proposed in Example 1 were used for serial crystallography data collection at synchrotron and XFEL facilities using a variety of protein crystals. The SPMs were glued on a specifically designed metal holder compatible with magnetic goniometers. Thaumatin crystals of 20 µm x 10 µm in size were grown as reported in IUCrJ (2016) 3, pp 180-191. The crystal-containing samples were mixed in a solution of 30% propylene glycol and 0.1% n-Dodecyl β-D-maltoside in precipitant and then deposited on the membrane. The excess of liquid was blotted from the back of the membrane using filter paper to minimize background and ice formation, and the sample was immediately flash-cooled in liquid nitrogen. Diffraction data were collected under cryogenic conditions at the PXI-X06SA beamline of the Swiss Light Source, Villigen, Switzerland, measuring 5 degrees wedges on each crystal with 50% transmission. Merging data from 50 crystals yielded a complete dataset at 1.85 Å resolution. Data from identically prepared samples were collected under cryogenic conditions with the SwissMX instrument at the SwissFEL, Villigen, Switzerland, in grid scan mode with 30 µm steps. 31'000 indexed images were merged to produce a data set at 1.60 Å resolution.

Other chips prepared identically were imaged using an online beamline microscope to extract crystal positions and collect data in prelocation mode.

### Example 6 application for protein crystallography at room temperature.

In a different experiment, Tubulin-Darpin crystals were prepared as reported in Nat Commun(2017) 8: 542-542 and deposited on 1 cm x 1 cm membranes prepared according to example 2. Samples were enclosed between two mylar foils windows without perforation. Data were collected at room temperature with the SwissMX instrument at the SwissFEL, Villigen, Switzerland, in grid scan mode with 70 µm steps. A single chip yielded 4000 indexed images.

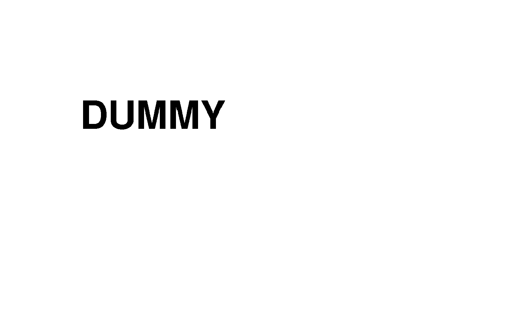

## Claims

1. A suspended polymer membrane, comprising:
a) at least one polymer membrane with a specific functionality, and
b) at least one polymer-based supporting frame prepared by additive manufacturing such that the polymer-based supporting frame adheres to the polymer membrane thereby generating free-standing suspended sections of the polymer membrane.

2. The suspended polymer membrane according to claim 1, wherein predetermined functionalities are implemented in the polymer membrane and/or a surface treatment of the polymer membrane is provided to modify the surface energy and/or the chemical properties of the polymer membrane.

3. The suspended polymer membrane according to claim 1 or 2, wherein the thickness of said polymer membrane lies between 20 nm and 500 µm, preferably between 20 nm and 10 µm, further preferably 100 nm and 250 µm.

4. The suspended polymer membrane according to any of the preceding claims, wherein the predetermined functionality is provided by an array of holes in a periodic arrangement or in a randomized arrangement.

5. The suspended polymer membrane according to claim 4 wherein an average diameter of the holes lies between 20 nm and 50 µm, preferably between 20 nm and 5 µm, further preferably between 1 µm and 20 µm.

6. The suspended polymer membrane according to claim 4 or 5 wherein the shape of holes is conical in nature or cylindrical in nature.

7. The suspended polymer membrane according to any of the preceding claims, wherein the polymer membrane comprises an amorphous thermoplastic material with a glass transition between 50°C and 300°C, preferably between 75°C and 200°C.

8. The suspended polymer membrane according to any of the preceding claims wherein the polymer membrane comprises a cyclo-olefin polymer (COP) or a cyclo-olefin copolymer (COC).

9. The suspended polymer membrane according to any of the preceding claims wherein the polymer membrane comprises a semi-crystalline thermoplastic material or a polymer blend comprising at least two different thermoplastic materials.

10. The suspended polymer membrane according to any of the preceding claims wherein the polymer membrane comprises an elastomeric material.

11. The suspended polymer membrane according to any of the preceding claims wherein the polymer membrane comprises a polymeric matrix which further comprises one or more additional components selected from the group of additives, stabilizers, pigments and/or fillers.

12. The suspended polymer membrane according to any of the preceding claims wherein a previously manufactured functional polymer membrane is used being prepared by one of the following techniques:
a) heavy ion bombardment, e.g. in a Cyclotron, followed by chemical etching, also referred to as "track etching";
b) electrospinning, optionally followed by partial compaction under elevated temperature;
c) block copolymer self-assembly followed by solvent-assisted removal of at least one polymer phase;
d) diffusion induced phase separation (DIPS), also referred to as non-solvent induced phase separation (NIPS);
e) thermally induced phase separation (TIPS);
f) pore formation by uni or biaxial stretching of a polymer film at ambient condition or elevated temperature,
g) punching of an array of holes through a polymer film;
h) laser drilling of holes into a polymer film; and
i) photolithographic structuring of a membrane-forming polymer film.

13. A method for manufacturing a suspended polymer membranes, comprising the steps of:
a) spin-coating of a soluble polymer layer onto a silicon wafer or another flat substrate being similar in terms of physical and chemical behavior;
b) spin-coating of a layer of a polymer with different solubility on top of the soluble polymer layer;
c) hot embossing of this two-layer setup with a master with structural features of height equal to or larger than the thickness of the two-layer setup;
d) optionally reactive ion etching of the holes generated by the hot embossing;
e) additive manufacturing of a support frame on top of the hot embossed two-layer setup;
f) dissolving of the polymer underlayer in a specific solvent, resulting in a freestanding suspended-polymer membrane being supported by the support frame; and
g) optional treating the surface of the polymer membrane in order to modify the chemical and/or physical properties of the polymer membrane, such as the surface energy of the polymer membrane.

14. The method according to claim 13 wherein an amorphous thermoplastic is used as the top polymer in the spin-coated two-layer setup.

15. The method according to claim 13 or 14 wherein the spin-coated layer of a polymer with low water solubility is fixed on a flat surface being provided by the spin-coated layer of the soluble polymer material.

16. The method according to any of the preceding claims 13 to 15, wherein the support frame is manufactured by the means of a filament 3D-printer.

17. The method according to any of the preceding claims 13 to 16, wherein additional functional elements, such as electrodes and/or microfluidic components, are implemented in an additional process step before the dissolution of the soluble polymer layer.
